# FASCICULE DE BREVET EUROPEEN

(11) **EP 1 798 112 B1**
(45) Date de publication et mention de la délivrance du brevet: **11.05.2011**
(21) Numéro de dépôt: 06291931.1
(22) Date de dépôt: 14.12.2006
(51) Int. Cl.: B60R 13/02

(54) **Procédé de moulage par injection plastique d'une pièce de garnissage, et pièce de garnissage issue de ce procédé**
Verfahren zum Spritzgiessen eines Ausstattungsteiles sowie danach hergestelltes Ausstattungsteil
Method of moulding a trim part by plastic injection, and trim part resulting from this method

(30) Priorité: 15.12.2005 FR 0512776
(43) Date de publication de la demande: 20.06.2007
(73) Titulaire: PEUGEOT CITROËN AUTOMOBILES S.A., 78140 Velizy Villacoublay (FR); Simoldes Plasticos, Lda, 3721-909 Oliveira de Azemeis (PT)
(72) Inventeur: Veron-Delor, Laurent, 28130 Hanches (FR); Chaume, Guy, 91430 Vauhallan (FR); Caminha Barros Castro, Artur Manuel, 3730-230 Vale De Cambra (PT); Quelhas De Almeida, Helder Marco, 4420-005 Gondomar (PT); Barroso Portela, Orlando Joaquim, 3850-576 Branca ALB (PT)
(74) Mandataire: Domenego, Bertrand

(56) Documents cités:
- WO-A-97/12732
- DE-A1- 10 306 393
- DE-A1- 19 745 122
- FR-A1- 2 572 676
- JP-A- 4 031 149
- JP-A- 59 109 332
- JP-A- 2001 079 893
- JP-A- 2001 114 032
- PATENT ABSTRACTS OF JAPAN vol. 2003, no. 09, 3 septembre 2003 (2003-09-03) -& JP 2003 146173 A (KANTO AUTO WORKS LTD), 21 mai 2003 (2003-05-21)
- PATENT ABSTRACTS OF JAPAN vol. 2000, no. 11, 3 janvier 2001 (2001-01-03) -& JP 2000 210978 A (NISHIKAWA KASEI CO LTD), 2 août 2000 (2000-08-02)
- PATENT ABSTRACTS OF JAPAN vol. 1998, no. 14, 31 décembre 1998 (1998-12-31) -& JP 10 250519 A (TOYOTA MOTOR CORP), 22 septembre 1998 (1998-09-22)
- PATENT ABSTRACTS OF JAPAN vol. 1999, no. 08, 30 juin 1999 (1999-06-30) -& JP 11 078752 A (TOYOTA MOTOR CORP), 23 mars 1999 (1999-03-23)
- KRAFT H: "ERWEITERTE ANWENDUNGSBEREICHE FUER DAS MEHRKOMPONENTEN-SPRITZGIESSEN" KUNSTSTOFFE, CARL HANSER VERLAG, MUNCHEN, DE, vol. 83, no. 6, 1 juin 1993 (1993-06-01), pages 429-433, XP000372844 ISSN: 0023-5563
- MOLTER W ET AL: "HART UND WEICH NEBENEINANDER HARD AND SOFT TOGETHER" KUNSTSTOFFE, CARL HANSER VERLAG, MUNCHEN, DE, vol. 85, no. 6, 1 juin 1995 (1995-06-01), pages 817-818,820, XP000495994 ISSN: 0023-5563

## Description

La présente invention concerne un procédé de moulage par injection plastique d'une pièce de parement de véhicule automobile tel qu'une garniture de montant de baie vitrée.

Dans les véhicules automobiles, les baies vitrées, et notamment le pare-brise, sont maintenues dans un cadre métallique de la structure du véhicule. Pour améliorer l'aspect visuel intérieur de l'habitacle, les montants des cadres de baies de certains véhicules connus sont recouverts de garnitures de parement. Ces garnitures recouvrent totalement le cadre métallique et peuvent s'appuyer suivant un bord longitudinal directement sur le pare-brise.

Ces garnitures sont particulièrement importantes pour le style intérieur du véhicule puisqu'elles sont en permanence sous le regard du conducteur et du passager avant. Elles conditionnent aussi la visibilité du conducteur.

Afin de permettre que la garniture tienne sur le cadre maintenant le pare-brise, la garniture comporte un tronçon principal rigide réalisé en matière plastique moulé suivant un bord duquel est formé une lèvre longitudinale réalisée dans un matériau élastique. Cette lèvre longitudinale est propre à s'appliquer sur l'extrémité du collage de la feuillure du pare-brise assurant ainsi un ajustement sans jeu entre la feuillure du pare-brise et la garniture sans risquer de générer de bruits indésirables.

Par ailleurs, dans les véhicules haut de gamme, il est connu que les garnitures présentent du côté de l'habitacle une surface recouverte de tissu.

Cependant, de telles garnitures comportent une ébauche de garniture supportant une feuille de parement et formée d'un tronçon en matériau rigide le long duquel est rapportée et fixée une pièce en matériau d'aspect grainé, cette conception engendrant des coûts de fabrication industrielle élevés.

Le document JP 2003 146173 A divulgue un procédé de moulage par injection plastique d'une pièce de garnissage dans le domaine des airbags. Le brevet JP 2000 210978 se rapporte également à un procédé de moulage par injection d'une pièce de garnissage. Enfin, le brevet FR 2 572 676 décrit un procédé et un appareil de façonnage de moulages en résine synthétique multicolores.

L'invention a pour but de proposer un procédé de moulage par injection permettant de former une pièce de garnissage de véhicule comportant une surface de parement et présentant deux tronçons de rigidités différentes recouverts complètement par le parement, et qui de surcroît, soit d'un coût de mise en oeuvre réduit.

A cet effet, l'invention a pour objet un procédé de moulage par injection plastique d'une pièce de garnissage de véhicule selon la revendication 1.

Suivant des modes particuliers de mise en oeuvre, le procédé comporte une ou plusieurs des caractéristiques décrites dans les revendications 2 à 6.

L'invention a en outre pour objet une pièce de garnissage, destinée à garnir l'intérieur d'un véhicule automobile, réalisée par le procédé ci-dessus.

L'invention sera mieux comprise à la lecture de la description qui va suivre, donnée uniquement à titre d'exemple et faite en se référant aux dessins, sur lesquels :
- la figure 1 est une vue en perspective partielle d'un habitacle de véhicule automobile montrant un garnissage selon l'invention ;
- la figure 2 est une vue en section d'un montant avant de véhicule automobile montrant un garnissage selon l'invention .
- la figure 3 est une vue à plus grande échelle de l'extrémité inférieure de la pièce de garnissage de la figure 1 ;
- la figure 4 est une vue en section du garnissage de la figure 1 prise suivant la ligne II-II ;
- la figure 5 est une vue en section d'un moule en position ouverte pour l'injection d'un garnissage selon l'invention ; et
- les figures 6, 7, 8 et 9 sont des vues du moule illustrant des phases successives d'injection d'une pièce de garnissage.

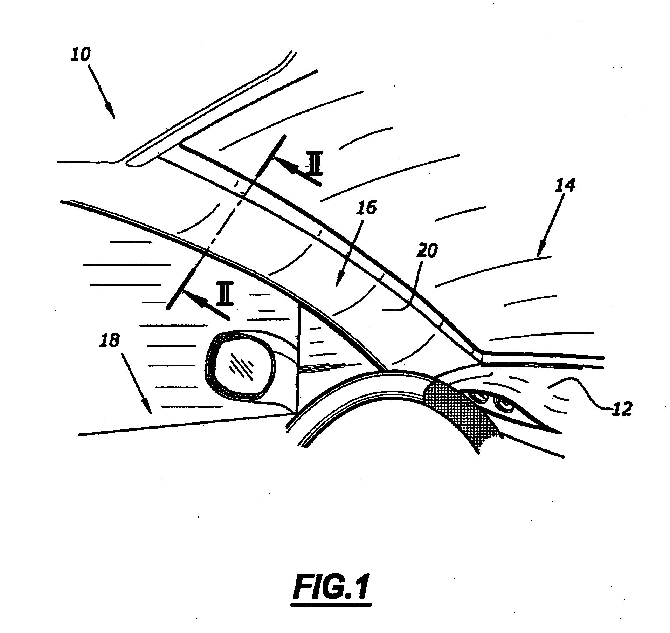

Sur la figure 1 est représenté partiellement un habitable 10 de véhicule comportant une planche de bord 12 disposée en avant d'un pare-brise 14 porté par la structure du véhicule. Un montant de pare-brise 16 s'étend sensiblement verticalement suivant la hauteur du pare-brise et sépare celui-ci de la portière désignée par la référence 18. Le montant 16 est recouvert d'une pièce de garnissage 20 selon l'invention. Cette pièce recouvre le montant 16 et est distante de la surface interne du pare-brise 14.

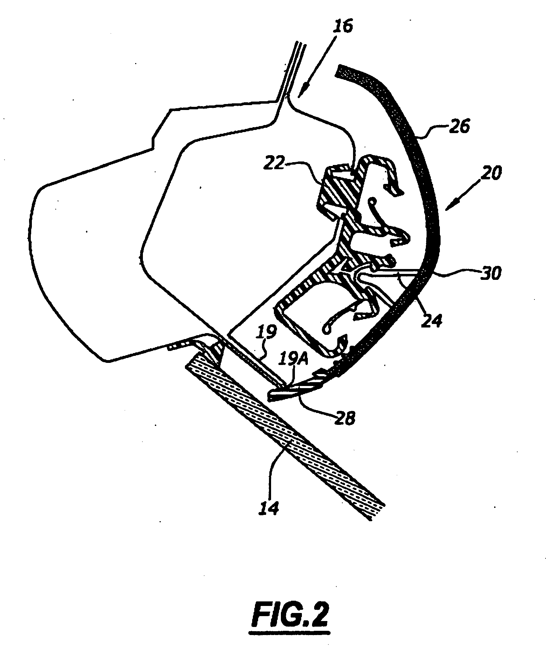

Le montant 16 et la pièce de garnissage 20 sont représentés à plus grande échelle sur la figure 2.

Pour le montage de la pièce de garnissage 20 sur le montant 16, une série d'agrafes 22 sont clippées sur le montant 16 comme connu en soi. Ces agrafes comportent des moyens de retenue élastique propres à enserrer des pattes de liaison 24 disposées sur la surface interne de la pièce de garnissage 20.

La pièce de garnissage 20 est formée par bi-injection dans un moule. Elle présente un tronçon principal rigide 26 bordé d'un côté par une lèvre longitudinale souple 28. Elle comporte en outre une feuille de parement 30 notamment tissée formant la surface extérieure visible de la pièce de garnissage et recouvrant complètement le tronçon rigide 26 et la lèvre souple 28.

La lèvre souple 28 est propre à s'appliquer sans jeu sur l'extrémité 19A de collage de la feuillure 19 du pare-brise 14 en se déformant élastiquement.

Le tronçon rigide et la lèvre souple sont moulés successivement dans un même moule.

Le tronçon rigide 26 est formé par exemple d'Acrylonitryle-Butadiène-Styrène (ABS), de polypropylène chargé ou non par exemple d'Ethylène-Propylène-Dimonomère (EPDM) et/ou de talc ou bien de fibres de verre ou encore tout autre charge classique. La lèvre souple 28 est réalisée par exemple en polymère Styrène-Ethylbutadiène-Styrène (SEBS) ou en Ethylène-Propylène-Dimonomère (EPDM).

La feuille de parement recouvrant les tronçons souple et rigide est formée par exemple d'un matériau tissé ou tricoté, d'alcantara, d'Oléfine Thermoplastique (TPO), d'Uréthane Thermoplastique (TPU), de Polychlorure de vinyle (PVC), d'un matériau non tissé par exemple floqué ou d'une feuille de liège ou de leur combinaison.

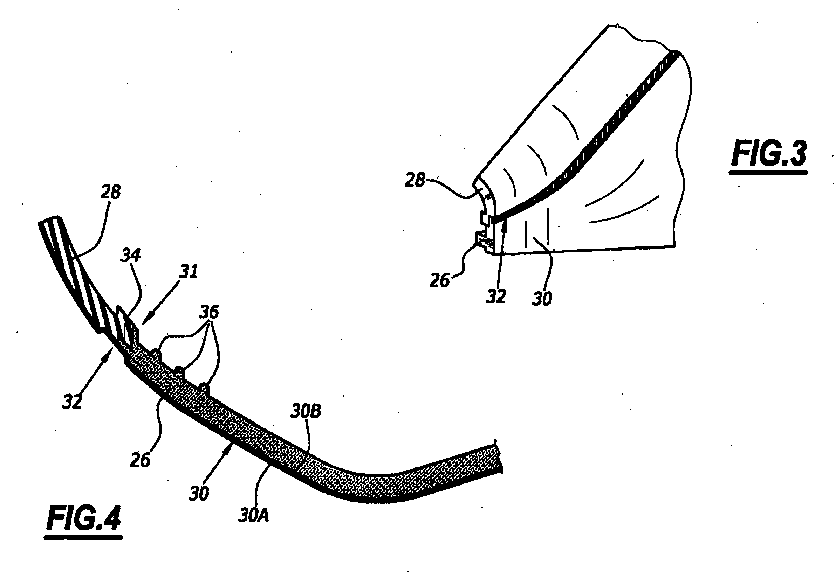

Comme illustré sur les figures 3 et 4, la pièce de garnissage présente suivant sa surface extérieure dans une région d'interface 31, entre le tronçon rigide 26 et la lèvre souple 28, un rainage 32 s'étendant suivant la hauteur de la pièce. La feuille de parement 30 est déformée en creux suivant ce rainage et épouse la forme de celui-ci.

A l'interface 31 entre le tronçon rigide 26 et la lèvre souple 28, ceux-ci s'interpénètrent suivant l'épaisseur de la pièce de garnissage. Ainsi par exemple, une langue 34 prolonge suivant son épaisseur le tronçon rigide 26 et pénètre dans une encoche de forme correspondante de la lèvre souple 28.

Enfin, au voisinage de l'interface 31, le tronçon rigide ou la lèvre souple, et de préférence le tronçon rigide, présente des profils de retenue 36 permettant la retenue lors du moulage comme cela sera expliqué ultérieurement. Ces profils sont formés par exemple de nervures longitudinales faisant saillie sur la face opposée à celle couverte par la feuille de parement 30. Ces profils sont formés sur celui du tronçon rigide ou de la lèvre souple qui est injecté le premier. Dans un mode de réalisation préféré, le tronçon rigide est injecté le premier.

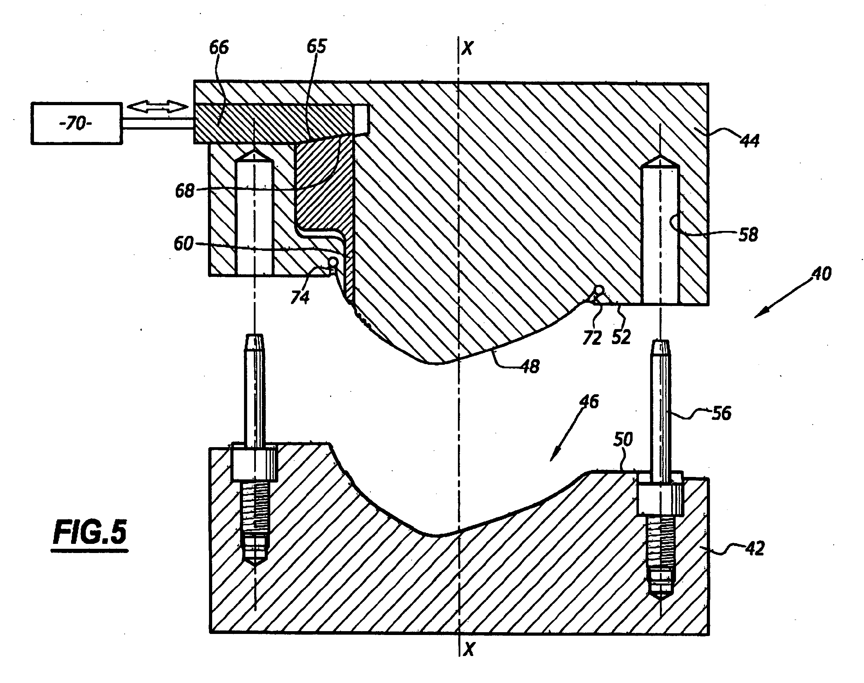

Sur la figure 5 est représenté un moule 40 pour le moulage par injection d'une pièce de garnissage de véhicule selon l'invention.

Le moule comporte une partie empreinte 42 et une partie noyau complémentaire 44, les parties étant mobiles à coulissement l'une par rapport à l'autre suivant un axe X-X s'étendant perpendiculairement au plan de joint défini entre la partie empreinte et la partie noyau. La partie empreinte présente une forme en creux 46 alors que la partie noyau présente un renflement 48 de forme sensiblement correspondante à celle de la forme en creux 46. Le renflement 48 et la forme en creux 46 sont bordés latéralement par des surfaces d'appui planes 50, 52 s'étendant parallèlement l'une à l'autre et définissant le plan de joint du moule.

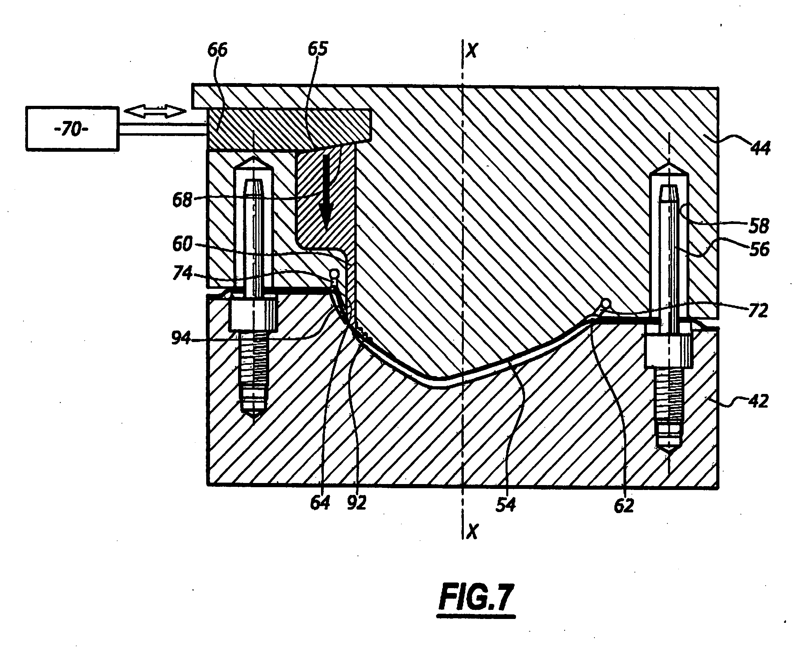

Le renflement et la forme en creux délimitent entre eux, lorsque le moule est fermé, une cavité d'injection 54 visible sur la figure 7.

Par ailleurs, des broches 56 s'étendant parallèlement à l'axe X-X font saillie depuis la partie fixe au-delà des surfaces d'appui 50. Des alésages 58 de forme correspondante sont formés en regard dans la partie noyau 44 du moule pour assurer un guidage en translation.

Un tiroir mobile 60 appelé écluse est déplaçable à coulissement suivant l'axe X-X par rapport à la partie noyau 44 du moule. Ce tiroir est déplaçable entre une position escamotée dans laquelle il affleure à la surface du renflement 48 dans la cavité 54 et une position active dans laquelle il fait saillie par rapport au renflement 48 et s'applique sur le fond de la forme en creux 46 en délimitant dans la cavité 54 définie, entre la forme en creux 46 et le renflement 48, deux chambres 62, 64 séparées de manière étanche par le tiroir 60 comme illustré sur la figure 7.

Le tiroir 60 est guidé à coulissement dans la partie noyau 44 et présente, à son extrémité opposée à son extrémité active, une rampe 65 propre à coopérer avec un poussoir 66 déplaçable à coulissement sensiblement perpendiculairement à l'axe X-X. Le poussoir 66 en forme de coin présente une rampe complémentaire 68 formant came propre à coopérer avec la rampe 65 pour provoquer le déplacement en translation du tiroir 60 lors du coulissement du poussoir 66. Le poussoir 66 est relié à un vérin 70 permettant son déplacement à coulissement.

Chaque chambre 62, 64 présente un orifice d'injection 72, 74 ménagé dans la partie noyau 44 du moule. Dans des modes de réalisation différents, plusieurs orifices d'injection peuvent être aménagés dans la partie noyau 44 du moule.

Pour la fabrication d'une pièce de garnissage, la feuille de parement 30 est disposée dans le moule ouvert entre les deux parties 42, 44 du moule.

Suivant un premier mode de réalisation, cette feuille est d'abord découpée à la taille avant d'être introduite dans le moule.

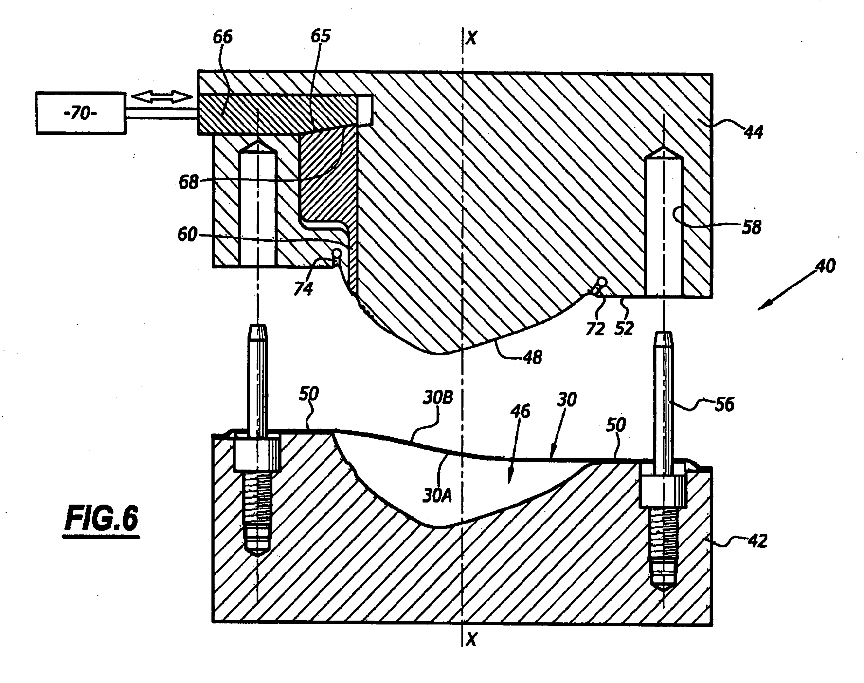

Cette feuille est appliquée sur les surfaces d'appui 50 de la partie fixe en porte-à-faux au dessus de l'empreinte 46 avec sa face devant être visible 30A tournée vers l'empreinte 46 comme illustré sur la figure 6.

Le moule est ensuite fermé comme illustré sur la figure 7 de sorte que la feuille de parement est enserrée entre les surfaces d'appui correspondantes 50, 52. Le tiroir 60 est amené dans sa position active de sorte que son extrémité presse la feuille de parement contre le fond de la forme en creux 46 s'appuyant sur la face cachée 30B de celle-ci. La matière plastique rigide est ensuite introduite depuis l'orifice d'injection 72 au travers de la partie noyau du moule dans la chambre 62 délimitée par le tiroir 60.

L'injection est faite selon une technique d'injection choisie dans le groupe consistant, entre autres, en l'injection sous-marine sur téton auxiliaire, l'injection en film, l'injection sous marine en courbe, et l'injection séquentielle basse pression.

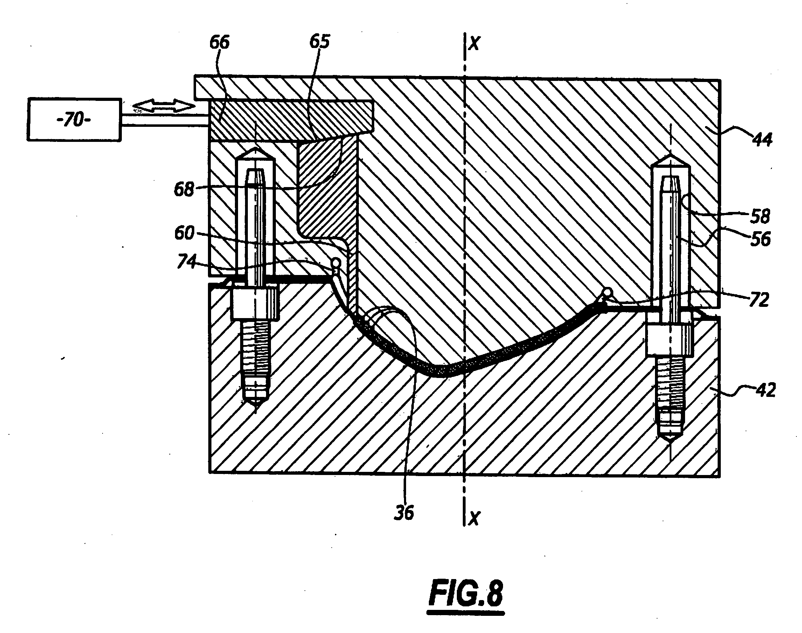

La matière plastique est injectée du côté 30B de la feuille de parement 30 contre lequel se trouve le tiroir comme illustré sur la figure 8. Sous l'action de la matière plastique injectée, la feuille de parement se trouve plaquée sur le fond de la forme en creux 46 et la matière plastique emplit complètement la chambre 62.

La présence des rainures ménagées dans le renflement 48 permet la formation des nervures 36 dans la partie rigide.

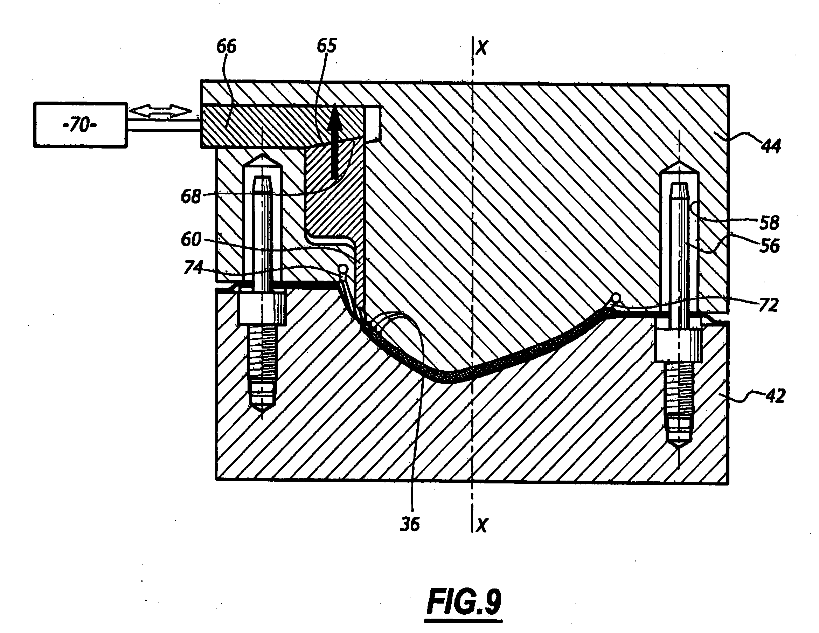

Après remplissage complet de cette chambre, et avant refroidissement complet de la matière plastique injectée, le tiroir 60 est amené dans sa position escamotée. La matière plastique souple est alors introduite depuis l'orifice 74 comme illustré sur la figure 9 dans la chambre 64. La matière emplit totalement la chambre 64 et l'espace laissé libre par le tiroir 60 escamoté. Les nervures 36 assurent une retenue efficace de la première matière plastique injectée dans le moule évitant que celle-ci ne se déplace sous l'action de la seconde matière plastique injectée. La seconde matière plastique fusionne avec la première matière plastique.

Après un refroidissement suffisant, le moule est ouvert et la pièce de garnissage est sortie. Les prolongements de la feuille de garnissage sont coupés le long des tronçons de matière plastique.

Ainsi, on obtient une pièce de garnissage revêtue totalement de la feuille de parement par un procédé simple et peu coûteux à mettre en oeuvre.

## Revendications

1. Procédé de moulage par injection plastique d'une pièce de garnissage (20) de véhicule, mettant en oeuvre un moule (40) à écluse comprenant une première et une seconde parties mobiles entre elles (42, 44) destinées à être assemblées mécaniquement ensemble afin de délimiter une cavité d'injection (54), et au moins un tiroir (60) porté par la première partie (44), le tiroir étant lui-même mobile par rapport à la première partie (44) entre une position active dans laquelle il divise la cavité d'injection (54) en une première et une seconde chambres d'injection (62, 64) et une position inactive où il est escamoté hors de la cavité (54) et le procédé comprenant les étapes consistant à :
- mettre en place, moule (40) ouvert, une feuille de parement (30) entre les première et seconde parties (42, 44) du moule, une première face (30B) de la feuille étant tournée vers la première partie (44) du moule et une seconde face (30A) de la feuille de parement étant tournée vers la seconde partie (42) du moule ;
- fermer le moule sur la feuille de parement (30), le tiroir (60) étant en position active de manière à venir s'appuyer de façon étanche sur la première face (30B) de la feuille de parement (30) ;
- réaliser une première injection d'une première matière plastique dans la première chambre d'injection (62) délimitée par la première face (30B) de la feuille de parement (30) et par le tiroir (60) de la première partie (44), le tiroir (60) restant en appui étanche sur ladite première face (30B) de la feuille de parement (30) ;
- le moule restant fermé, passer le tiroir mobile (60) en position escamotée ;
- réaliser une seconde injection d'une seconde matière plastique dans la seconde chambre d'injection (64), délimitée par la première face (30B) de la feuille de parement (30) et par la première partie (44), la seconde matière plastique fusionnant avec la première matière plastique ; et
- ouvrir le moule et extraire la pièce de garnissage formé, **caractérisé en ce que** la première matière est choisie dans le groupe consistant en de l'Acrylonitryle-Butadiène-Styrène (ABS) et du polypropylène chargé ou non d'Ethylène-Propylène-Dimonomère (EPDM), et est injectée selon une technique d'injection choisie dans le groupe consistant en l'injection sous-marine sur téton auxiliaire, l'injection en film, l'injection sous marine en courbe, et l'injection séquentielle basse pression et **en ce que** la seconde matière est choisie dans le groupe consistant en le Styrène-Ethylbutadiène-Styrène (SEBS) et l'Ethylène-Propylène-Dimonomère (EPDM) et est injectée, par injection sous marine en courbe.

2. Procédé de moulage plastique selon la revendication 1, **caractérisé en ce que** la feuille de parement (30) est déformable et se trouve plaquée sur le fond de la cavité d'injection (54) du moule (40) sous l'action de la première ou de la deuxième matière plastique injectée.

3. Procédé de moulage plastique selon la revendication 1 ou 2, **caractérisé en ce qu'**il comprend une étape préliminaire à la mise en place de feuille de parement (30) consistant à découper la feuille de parement dans une forme adaptée à la pièce.

4. Procédé de moulage plastique selon l'une des revendications 1 à 3, **caractérisé en ce qu'**il comprend une étape suivant l'extraction de la pièce consistant à découper le surplus de la feuille de parement (30).

5. Procédé de moulage par injection plastique selon l'une quelconque des revendications précédentes, **caractérisé en ce que** l'étape de passage du tiroir (60) de sa position active à sa position escamotée consiste à
- actionner dans une première direction un vérin (70) en liaison avec un poussoir (66) en forme de coin, présentant une came (68) ;
- guider en translation le tiroir (60) dans une seconde direction, sous l'action du mouvement du poussoir (66) ;
- déplacer dans la seconde direction le tiroir (60) portant une contre-came (65) coopérant avec la came (68) sous l'action du mouvement du poussoir (66).

6. Procédé selon l'une quelconque des revendications précédentes, **caractérisé en ce que** la feuille de parement (30) est choisie dans le groupe consistant en un matériau tissé ou tricoté, d'alcantara, d'Oléfine Thermoplastique (TPO), d'Uréthane Thermoplastique (TPU), de Polychlorure de vinyle (PVC), d'un matériau non tissé par exemple floqué ou d'une feuille de liège et des combinaisons comprenant une ou plusieurs des matières précédentes.

7. Pièce de garnissage (20), destinée à garnir l'intérieur d'un véhicule automobile, **caractérisée en ce qu'**elle est réaliste selon le procédé suivant l'une quelconque des revendications précédentes 1 à 6.

## Claims

1. Plastic injection moulding method for a vehicle trimming part (20) which uses a lock mould (40), comprising a first and a second part (42, 44) which are mobile relative to one another, and are designed to be assembled mechanically together in order to delimit an injection cavity (54), and at least one slide (60) which is supported by the first part (44), the slide itself being mobile relative to the first part (44), between an active position in which it divides the injection cavity (54) into a first and a second injection chamber (62, 64), and an inactive position in which it is retracted from the cavity (54), and the method comprising the steps consisting of:
- with the mould (40) open, putting into place a facing sheet (30) between the first and second parts (42, 44) of the mould, a first surface (30B) of the sheet being turned towards the first part (44) of the mould, and a second surface (30A) of the facing sheet being turned towards the second part (42) of the mould;
- closing the mould onto the facing (30), the slide (60) being in the active position, such as to be supported in a sealed manner on the first surface (30B) of the facing sheet (30);
- carrying out a first injection of a first plastic material into the first injection chamber (62) which is delimited by the first surface (30B) of the facing sheet (30) and by the slide (60) of the first part (44), with the slide (60) remaining supported in a sealed manner on the said first surface (30B) of the facing sheet (30);
- with the mould remaining closed, moving the mobile slide (60) into the retracted position;
- carrying out a second injection of a second plastic material into the second injection chamber (64), which is delimited by the first surface (30B) of the facing sheet (30) and by the first part (44), the second plastic material fusing with the first plastic material; and
- opening the mould and extracting the trimming part formed,
**characterised in that** the first material is selected from the group consisting of Acrylonitrile-ButadieneStyrene (ABS), and polypropylene which may or may not be filled with Ethylene-Propylene-Dimonomer (EPDM), and is injected according to an injection technique selected from the group consisting of underwater injection on an auxiliary stud, injection in a film, underwater injection in a curve, and low-pressure sequential injection, and **in that** the second material is selected from the group consisting of Styrene-Ethylbutadiene-Styrene (SEBS) and Ethylene-Propylene-Dimonomer (EPDM), and is injected by underwater injection in a curve.

2. Plastic moulding method according to claim 1, **characterised in that** that facing sheet (30) is deformable, and is placed on the base of the injection cavity (54) of the mould (40) under the action of the first or second plastic material injected.

3. Plastic moulding method according to claim 1 or 2, **characterised in that** it comprises a step prior to the putting into place of the facing sheet (30), consisting of cutting the facing sheet into a form designed for the part.

4. Plastic moulding method according to one of claims 1 to 3, **characterised in that** it comprises a step further to the extraction of the part, consisting of cutting out the surplus of the facing sheet (30).

5. Plastic injection moulding method according to any one of the preceding claims, **characterised in that** the step of movement of the slide (60) from its active position to its retracted position consists of:
- activating in a first direction a jack (70) which is connected to a thruster (66) which is in the form of a wedge, and has a cam (68);
- guiding the slide (60) in translation in a second direction, under the action of the movement of the thrusters (66); and
- displacing in the second direction the slide (60) which bears a counter-cam (65) which co-operates with the cam (68) under the action of the movement of the thruster (66).

6. Method according to any one of the preceding claims, **characterised in that** the facing sheet (30) is selected from the group consisting of a woven or knitted material made of Alcantara, Thermoplastic Olefin (TPO), Thermoplastic Urethane (TPU), Polyvinyl Chloride (PVC), a non-woven material, which for example is flocked, or a sheet of cork and combinations comprising one or a plurality of the preceding materials.

7. Trimming part (20), which is designed to trim the interior of a motor vehicle, **characterised in that** it is produced according to the method in accordance with any one of claims 1 to 6.

## Patentansprüche

1. Verfahren zum Spritzgießen eines Kraftfahrzeug-Ausstattungsteils (20) mittels eines Schleusen-Formwerkzeugs (40), einen ersten und einen zweiten Teil (42, 44) umfassend, untereinander beweglich und dazu bestimmt, mechanisch zusammengefügt zu werden, so dass sie eine Einspritzkavität (54) begrenzen, und wenigstens einen Schieber (60) umfassend, getragen von dem ersten Teil (44), wobei der Schieber selbst in Bezug auf den ersten Teil (44) verschiebbar ist zwischen einer aktiven Position, in der er die Einspritzkavität (54) in eine erste und eine zweite Einspritzkammer (62, 64) unterteilt, und einer inaktiven Position, wo er außerhalb der Kavität (54) versenkt ist, und das Verfahren die Schritte umfasst, die darin bestehen:
- einen Verkleidungsbogen (30) in dem offenen Formwerkzeug (40) zu platzieren, zwischen dem ersten und dem zweiten Teil (42, 44) des Formwerkzeugs, wobei eine erste Seite (30B) des Bogens dem ersten Teil (44) des Formwerkzeugs zugewandt ist und eine zweite Seite (30A) des Verkleidungsbogens dem zweiten Teil (42) des Formwerkzeugs zugewandt ist;
- das Formwerkzeug auf dem Verkleidungsbogen (30) zu schließen, wobei der Schieber (60) sich in der aktiven Position befindet, so dass er sich auf abdichtende Weise auf der ersten Seite (30B) des Verkleidungsbogens (30) abstützt;
- eine erste Einspritzung eines ersten Kunststoffs in die erste Einspritzkammer (62) vorzunehmen, abgegrenzt durch die erste Seite (30B) des Verkleidungsbogens (30) und durch den Schieber (60) des ersten Teils (44), wobei der Schieber (60) seine abdichtende Abstützung auf der ersten Seite (30B) des Verkleidungsbogens (30) beibehält;
- den beweglichen Schieber (60) bei geschlossenem Formwerkzeug in die Versenkungsposition zu verschieben;
- eine zweite Einspritzung eines zweiten Kunststoffs in die zweite Einspritzkammer (64) - abgegrenzt durch die erste Seite (30B) des Verkleidungsbogens (30) und durch den ersten Teil (44) - vorzunehmen, wobei sich der zweite Kunststoff mit dem ersten Kunststoff vereinigt; und
- das Formwerkzeug zu öffnen und das Ausstattungsteil zu entnehmen,
**dadurch gekennzeichnet, dass** der erste Stoff ausgewählt wird aus der Gruppe, die AcrylnitrilButadien-Styrol (ABS) und EPDM-haltiges Propylen umfasst und gemäß einer Spritztechnik gespritzt wird, die aus der Gruppe ausgewählt wird, die den Tunnelanguss mit Hilfszapfen, den Filmanguss, den gebogenen Tunnelanguss und das Niederdruck-Reihenspritzgießverfahren umfasst, und der zweite Stoff ausgewählt wird aus der Gruppe, die Styrol-Buthadien-Styrol (SEBS) und Ethyl-Propylen-Dien-Kautschuk umfasst und mittels gebogenem Tunnelanguß gespritzt wird.

2. Spritzgießverfahren nach Anspruch 1, **dadurch gekennzeichnet, dass** der Verkleidungsbogen (30) verformbar ist und unter der Wirkung des ersten oder des zweiten eingespitzten Kunststoffs gegen den Boden der Einspritzkavität (54) des Formwerkzeugs (40) gepresst wird.

3. Spritzgießverfahren nach dem Anspruch 1 oder 2, **dadurch gekennzeichnet, dass** es einen der Platzierung des Verkleidungsbogens (30) vorausgehenden Schritt umfasst, darin bestehend, den Verkleidungsbogen in einer dem Ausstattungsteil angepassten Form zuzuschneiden.

4. Spritzgießverfahren nach einem der Ansprüche 1 bis 3, **dadurch gekennzeichnet, dass** es einen auf die Entnahme des Teils folgenden Schritt umfasst, darin bestehend, den Überstand des Verkleidungsbogens (30) wegzuschneiden.

5. Spritzgießverfahren nach einem der vorhergehenden Ansprüche, **dadurch gekennzeichnet, dass** der Schritt zum Verschieben des Schiebers (60) aus seiner aktiven Position in seine versenkte Position darin besteht,
- einen Zylinder (70), verbunden mit einem einen Nocken bzw. eine Nockenfläche (68) aufweisenden keilförmigen Drücker (66), in einer ersten Richtung zu betätigen;
- den Schieber (60) unter der Wirkung der Bewegung des Drückers (66) translatorisch in einer zweiten Richtung zu führen;
- den Schieber (60), der eine unter der Wirkung der Bewegung des Drückers (66) mit der Nockenfläche (68) kooperierenden Gegennockenfläche (65) umfasst, in die zweite Richtung zu verschieben.

6. Verfahren nach einem der vorhergehenden Ansprüche, **dadurch gekennzeichnet, dass** der Verkleidungsbogen (30) ausgewählt wird aus der Gruppe, die umfasst: ein gewebtes oder gestricktes Material, aus Alcantara, aus TPO, aus TPU, aus PVC, aus einem nichtgewebten zum Beispiel geflockten Material oder einem Korkblatt und Kombinationen mit einem oder mehreren der vorhergehenden Materialien.

7. Ausstattungsteil (20), bestimmt zur Innenverkleidung eines Kraftfahrzeugs, **dadurch gekennzeichnet, dass** es nach einem der Ansprüche 1 bis 6 realisiert wird.
